# FASCICULE DE BREVET EUROPEEN

(11) **EP 1 172 911 B1**
(45) Date de publication et mention de la délivrance du brevet: **30.06.2010**
(21) Numéro de dépôt: 01401803.0
(22) Date de dépôt: 05.07.2001
(51) Int. Cl.: H02G 3/06

(54) **Dispositif de raccordement de goulotte**
Kabelkanalkupplungsvorrichtung
Connecting device for ducting

(30) Priorité: 12.07.2000 FR 0009132
(43) Date de publication de la demande: 16.01.2002
(73) Titulaire: LEGRAND, 87000 Limoges (FR); Legrand SNC, 87000 Limoges (FR)
(72) Inventeur: Buard, Yvon, 53600 Voutre (FR)
(74) Mandataire: Santarelli

(56) Documents cités:
- FR-A- 2 731 496

## Description

La présente invention concerne de manière générale le raccordement entre des tronçons de goulottes mis en oeuvre pour l'installation de quelconques appareillages électriques, tels que prises de courant ou autres, et pour le cheminement de conducteurs ou de câbles électriques nécessaires à leur desserte, qu'il s'agisse de plinthes lorsque de telles goulottes sont directement implantées en plinthe au pied d'une quelconque paroi, ou qu'il s'agisse de moulures lorsqu'elles sont implantées en pleine surface sur de telles parois, par exemple le long de l'encadrement d'une ouverture ajourant celles-ci, ou à la jonction entre un mur et un plafond.

L'invention concerne plus particulièrement un dispositif de raccordement d'au moins deux goulottes comprenant une platine pour joindre les fonds des socles des goulottes, ladite platine étant munie, sur chacun de ses bords adjacents aux bords coupés des socles des goulottes, de languettes longitudinales aptes à prendre appui sur les deux faces opposées de chaque fond.

L'invention trouve une application particulièrement avantageuse pour la réalisation de dispositifs de raccordement d'angle, de dispositifs de dérivation ou de jonction entre ces goulottes.

On connaît déjà du document FR 2 731 496, un dispositif de raccordement tel que défini ci-dessus, dans lequel les languettes longitudinales de la platine, aptes à s'appliquer sur la face du fond d'une goulotte tournée vers le mur ou la cloison sur lequel ledit fond est fixé, présentent une certaine épaisseur et donc une certaine rigidité.

Dans ce cas, selon ce document, pour ne pas gêner la fixation du socle de la goulotte sur le mur ou la cloison, ces languettes longitudinales sont reçues dans des logements définis par le fond du socle de la goulotte, ayant une section en forme de U en renfoncement par rapport à la surface du fond s'appliquant sur le mur ou sur la cloison sur lequel il est fixé.

Au surplus, selon ce document, les languettes longitudinales portées par cette platine et destinées à s'appliquer sur la face du fond opposée à celle appliquée au mur ou à la cloison, font saillies par rapport à la face de la platine qui les porte et ont une section globalement en forme de Z en sorte qu'elles prennent appui élastiquement sur ladite face du fond du socle de la goulotte en compensant les jeux résultant de l'assemblage des autres languettes longitudinales dans les logements correspondants de la face opposée dudit fond.

Cet agencement décrit précédemment, outre le fait qu'il est relativement complexe, nécessite un aménagement spécial du fond du socle de la goulotte.

Il est donc relativement coûteux à réaliser.

Afin de pallier cet inconvénient précité, la présente invention propose un nouveau dispositif de raccordement d'au moins deux goulottes, tel que défini en introduction, dans lequel lesdites languettes longitudinales sont sensiblement planes, présentent une faible épaisseur comprise entre environ 0,2 et 1 mm, et sont aptes à prendre appui élastiquement sur lesdites faces opposées du fond du socle de chaque goulotte.

Ainsi, selon l'invention, la faible épaisseur, d'une part, de la ou des languettes longitudinales destinées à s'appliquer contre la face du fond s'appliquant sur le mur ou sur la cloison sur lequel la goulotte est fixée, permet d'éviter un agencement spécial du fond de la goulotte, et, d'autre part, de la ou des languettes longitudinales s'appliquant sur la face du fond opposée à celle s'appliquant sur le mur, permet de conserver intact le fond utile pour le passage des câbles ou de conducteurs, ou pour la mise en place d'appareillages électriques dans ladite goulotte.

D'autres caractéristiques avantageuses non limitatives du dispositif de raccordement selon l'invention sont les suivantes :
- sur chaque bord de la platine adjacent à un bord coupé d'un socle d'une goulotte, trois languettes longitudinales sont disposées en podium, deux languettes d'extrémité étant positionnées sur la face supérieure de la platine de manière à se placer contre la face supérieure du fond du socle de la goulotte, et une languette centrale étant positionnée sur la face inférieure de la platine de manière à se placer contre la face inférieure du fond du socle de la goulotte ;
- les languettes longitudinales présentent une épaisseur identique ;
- l'épaisseur de chaque languette longitudinale est égale à 0,5 mm environ ;
- ladite platine est plane, avec au moins deux bords d'extrémité transversaux aptes à être placés de manière adjacente à deux bords coupés de deux goulottes ;
- les deux bords d'extrémité transversaux de ladite platine forment entre eux un angle de manière à permettre le raccordement de deux goulottes s'étendant dans un même plan selon deux directions différentes ;
- ladite platine comprend, sur ses bords longitudinaux, des parois aptes à se positionner dans le prolongement des ailes latérales des socles des goulottes de manière à assurer une continuité de parois ;
- ladite platine porte, sur sa face supérieure, une cheminée percée d'un orifice traversant qui débouche sur la face inférieure de la platine, cet orifice formant un conduit de passage pour un élément de fixation de ladite platine sur une paroi support de celle-ci ;
- ladite platine comprend deux parties formant entre elles un angle rentrant ou sortant, chaque bord de chaque partie de la platine apte à être positionné de manière adjacente à un bord coupé d'un socle d'une goulotte, étant muni de languettes longitudinales ;
- les deux parties de la platine sont fixes l'une par rapport à l'autre ;
- lesdites parties de ladite platine sont articulées l'une par rapport à l'autre par l'intermédiaire d'une partie de jonction formant charnière ; et
- ladite platine est formée en une seule pièce par moulage d'une matière plastique.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en perspective de dessus d'un mode de réalisation du dispositif de raccordement selon l'invention, mis en place entre deux tronçons de goulottes disposés en angle ;
- la figure 2 est une vue de dessous du dispositif de raccordement de la figure 1 ;
- la figure 3 est une vue en perspective de côté d'une variante de réalisation du dispositif de raccordement représenté sur la figure 1 ;
- la figure 4 est une vue en coupe selon le plan A-A du dispositif de raccordement de la figure 3 ;
- la figure 5 est une vue en perspective de dessus du couvercle de fermeture du dispositif de raccordement représenté sur la figure 1 ;
- la figure 6 est une vue de dessous du couvercle de la figure 5 ;
- les figures 7a à 7d sont des vues de dessus du couvercle de la figure 5 dans différentes configurations d'angulation ; et
- la figure 8 est une vue en perspective d'une variante de réalisation du dispositif de raccordement selon l'invention, positionné dans un angle de parois de façon à assurer la jonction entre trois tronçons de goulottes s'étendant dans trois directions différentes.

En préliminaire, on notera que d'un mode de réalisation à l'autre représenté sur les différentes figures, les éléments identiques ou similaires seront, dans la mesure du possible, référencés par les mêmes signes de référence, et ne seront pas décrits à chaque fois.

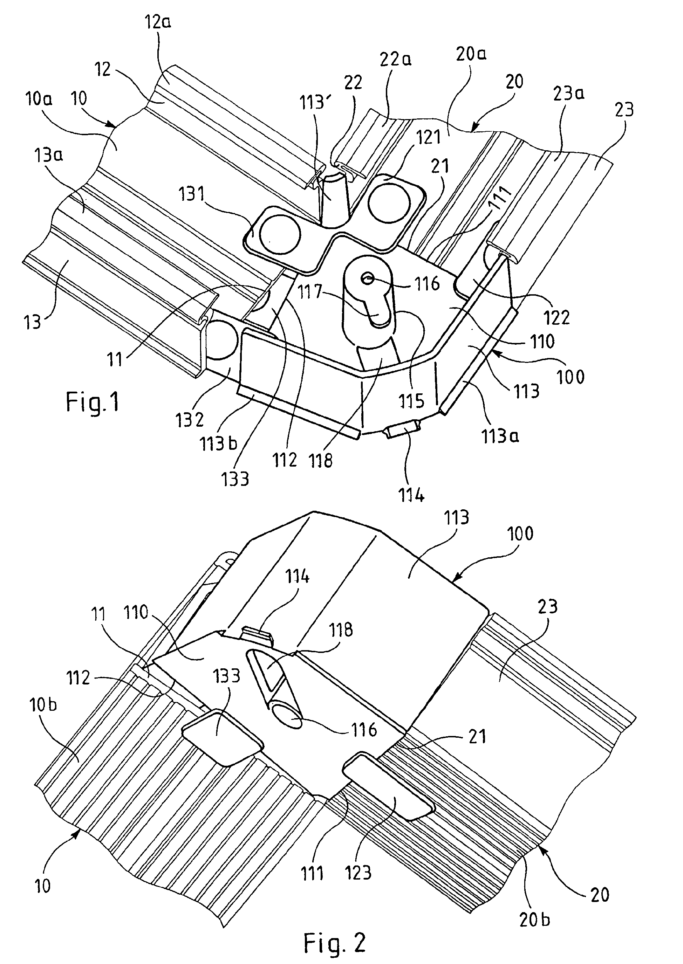

Sur les figures 1 et 2, on a représenté un premier mode de réalisation d'un dispositif de raccordement 100 de deux tronçons de goulottes 10, 20. Ce dispositif de raccordement 100 est ici un dispositif de dérivation permettant le raccordement des deux tronçons de goulottes 10, 20 s'étendant dans un même plan selon deux directions différentes.

De manière connue en soi, chaque tronçon de goulotte 10, 20 comporte un socle en forme de U avec un fond et deux ailes latérales 12, 13, 22, 23. Chacune des ailes latérales 12, 13, 22, 23 de chaque tronçon de goulotte 10, 20 présente, en partie supérieure, un retour transversal vers l'intérieur de la goulotte 12a, 13a, 22a, 23a, permettant l'accrochage d'un couvercle de fermeture (ici non représenté).

Le dispositif de raccordement 100 représenté sur les figures 1 et 2 comprend une platine 110 pour joindre les fonds des socles des tronçons de goulottes 10, 20.

Selon le mode de réalisation représenté, ladite platine 110 est plane et présente deux bords d'extrémité transversaux 111, 112 aptes à être placés de manière adjacente aux bords coupés 11, 21 des deux tronçons de goulottes 10, 20.

Ces deux bords d'extrémité transversaux 111, 112 de ladite platine 110 forment entre eux un angle de manière à permettre le raccordement des deux tronçons de goulottes 10, 20 s'étendant dans un même plan, selon deux directions différentes formant entre elles un angle variant entre environ 85 et 95 degrés.

Cette platine 110 comporte, en outre, sur ses bords longitudinaux, des parois 113, 113' aptes à se positionner dans le prolongement des ailes latérales 12, 13, 22, 23 des socles des tronçons de goulottes 10, 20 de manière à assurer une continuité de parois.

Cette platine 110 porte, sur sa face supérieure, une cheminée 115 percée d'un orifice traversant 116 qui débouche sur la face inférieure de la platine 110, cet orifice formant un conduit de passage pour un élément de fixation, tel qu'une vis ou une pointe, apte à permettre la fixation de ladite platine 110 sur une paroi support de celle-ci telle qu'un mur ou une cloison.

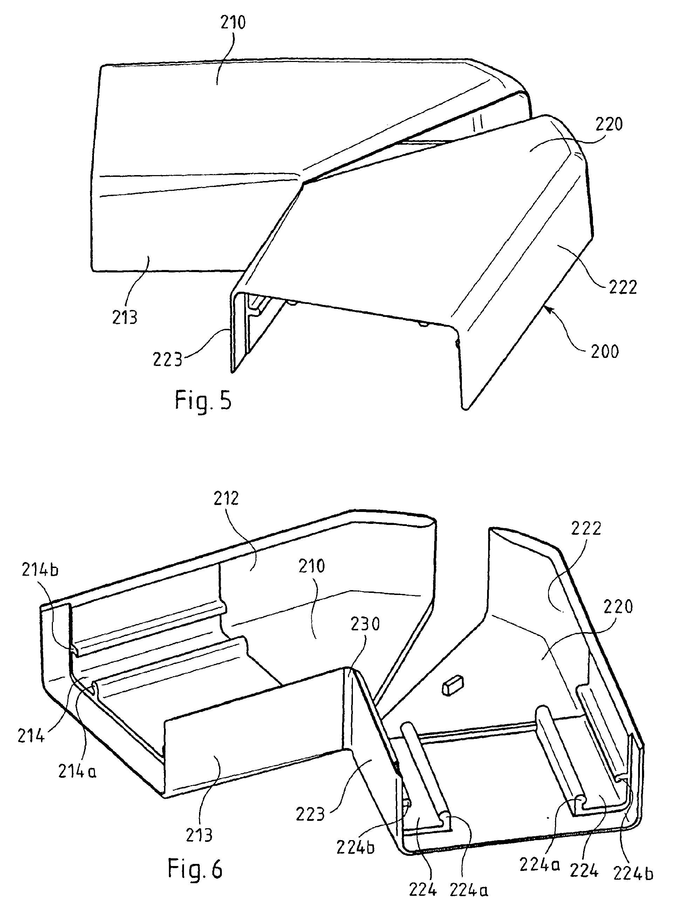

Comme le montre plus particulièrement la figure 1, au niveau de la partie supérieure de la cheminée 115, il est prévu une languette 117 faisant saillie de la surface périphérique de ladite cheminée 115 et servant de support à un couvercle de fermeture de ladite platine qui sera décrit ultérieurement en référence aux figures 5 à 7.

Pour pouvoir démouler cette languette 117, il est prévu, dans la platine, en regard de ladite languette 117, un orifice 118 de forme identique mais de plus grandes dimensions.

Avantageusement, la cheminée permet d'éviter la mise en place d'un élément de fixation de ladite platine au-dessus du niveau des bords des parois longitudinales 113, 113' prolongeant les ailes latérales des tronçons de goulottes, et permet de ce fait de les protéger d'un éventuel coup de marteau, lors de l'enfoncement d'une pointe de fixation dans une paroi via l'orifice traversant 116 pour la fixation de la platine 110 sur ladite paroi.

La platine 110 est munie, sur chacun de ses bords adjacents 111, 112 aux bords coupés 11, 21 des socles des goulottes 10, 20, de languettes longitudinales 121, 122, 123, 131, 132, 133 aptes à prendre appui sur les deux faces opposées 10a, 10b, 20a, 20b de chaque fond de chaque socle de tronçon de goulotte 10, 20.

On entend par "longitudinale" la direction longitudinale de la goulotte sur laquelle lesdites languettes prennent appui.

Ces languettes 121, 122, 123, 131, 132, 133 sensiblement planes présentent une faible épaisseur comprise entre environ 0,2 et 1 mm et préférentiellement égale à environ 0,5 mm. Elles sont aptes à prendre appui élastiquement sur lesdites faces opposées 10a, 10b, 20a, 20b de chacun des fonds desdits socles.

Comme le montrent plus particulièrement les figures 1 et 2, sur chaque bord 111, 112 de la platine 110, trois languettes longitudinales telles que définies ci-dessus 121, 122, 123, 131, 132, 133 sont disposées en podium, deux languettes d'extrémité 121, 122, 131, 132 étant positionnées sur la face supérieure de ladite platine 110 de manière à se placer contre la face supérieure 10a, 20a du fond du socle de chaque goulotte 10, 20, et une languette centrale 123, 133 étant positionnée sur la face inférieure de la platine 110 de manière à se placer contre la face inférieure 10b, 20b du fond du socle de chaque goulotte 10, 20. Ces languettes longitudinales 121, 122, 123, 131, 132, 133 présentent ici une forme rectangulaire.

Avantageusement, ces languettes longitudinales planes de faible épaisseur permettent un bon maintien de la platine aux socles des goulottes sans pour cela former une surépaisseur gênante à la mise en place des socles des goulottes sur le mur ou la cloison sur lequel ils doivent être fixés, ou à la mise en place de supports d'appareillages électriques dans chacun des socles ou encore à la circulation de câbles ou de conducteurs électriques dans lesdits socles.

La faible épaisseur de ces languettes longitudinales permet une utilisation du dispositif de raccordement sur n'importe quel socle de goulotte standard sans nécessiter un aménagement spécial du fond du socle.

Chaque groupe de languettes longitudinales prévu sur un bord de la platine, apte à être positionné de manière adjacente à un bord coupé d'un socle de goulotte, prend en sandwich le fond du socle correspondant pour s'accrocher à celui-ci par pincement.

En outre, la platine 110 peut être mise en place, par l'intermédiaire de ses languettes, sur le socle d'une goulotte "en l'air", c'est-à-dire non fixée sur une paroi, l'ensemble constitué par ladite platine 110 et la goulotte, de manipulation facile, étant ensuite fixé sur ladite paroi.

En variante, il est toutefois possible de fixer dans un premier temps ladite platine au mur, puis de mettre en place les socles des goulottes en les insérant entre les languettes longitudinales de celle-ci qui présentent l'avantage de maintenir lesdits socles en position avant leur fixation au mur par l'installateur, ce qui facilite sa tâche surtout s'il est seul.

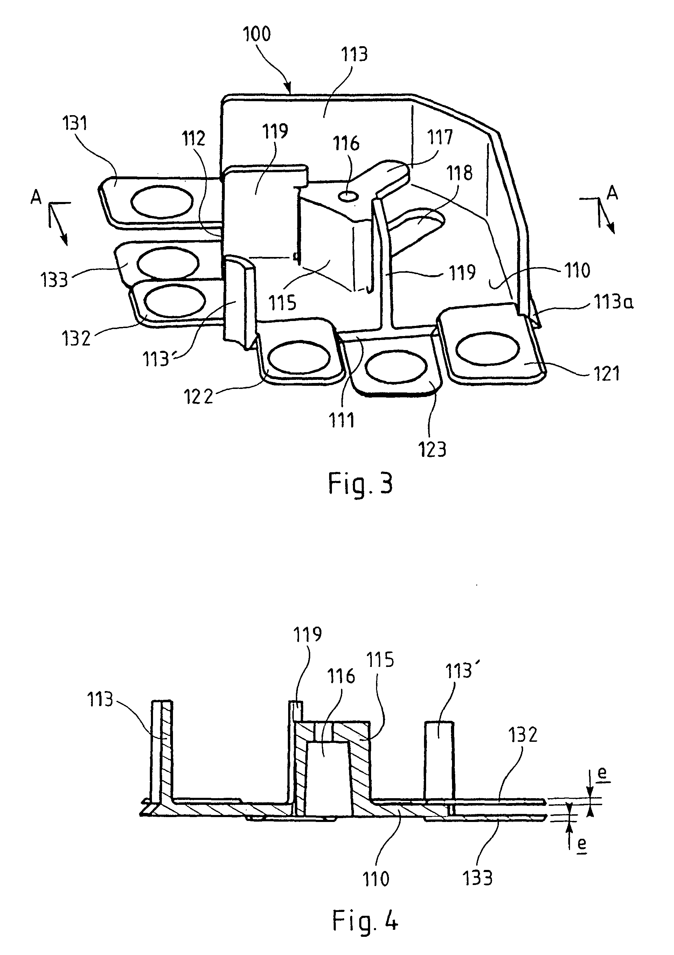

Sur les figures 3 et 4, on a représenté une variante du dispositif de raccordement 100 représenté sur les figures 1 et 2, qui comporte, comme différence essentielle, une forme de cheminée 115 différente, sensiblement en trièdre dont les angles ont été coupés, cette cheminée 115 se prolongeant selon deux directions perpendiculaires par des cloisons verticales 119 qui s'étendent jusqu'aux bords transversaux 111, 112 de ladite platine 110.

Ce cloisonnement permet de diviser ledit dispositif de raccordement 100 en deux conduits de cheminement de câbles ou de conducteurs électriques isolés l'un de l'autre.

Par contre, l'agencement de languettes longitudinales est identique à celui du dispositif de raccordement 100 représenté sur les figures 1 et 2 et ne sera alors pas décrit de nouveau.

L'épaisseur e des languettes longitudinales 121, 122, 123, 131, 132, 133 est également identique à celle des languettes longitudinales 121, 122, 123, 131, 132, 133 du dispositif de raccordement représenté sur les figures 1 et 2.

Sur les figures 5 à 7, on a représenté un mode de réalisation d'un couvercle de fermeture 200 du dispositif de raccordement 100 représenté sur les figures 1 à 4.

Ce couvercle de fermeture 200 présente ici deux parties 210, 220 articulées l'une par rapport à l'autre par l'intermédiaire d'une partie de raccordement souple 230 formant charnière d'articulation, de façon à permettre un positionnement angulaire différent des deux parties 210, 220 l'une par rapport à l'autre, en accord avec le positionnement angulaire des deux tronçons de goulottes à raccorder par le dispositif de raccordement 100.

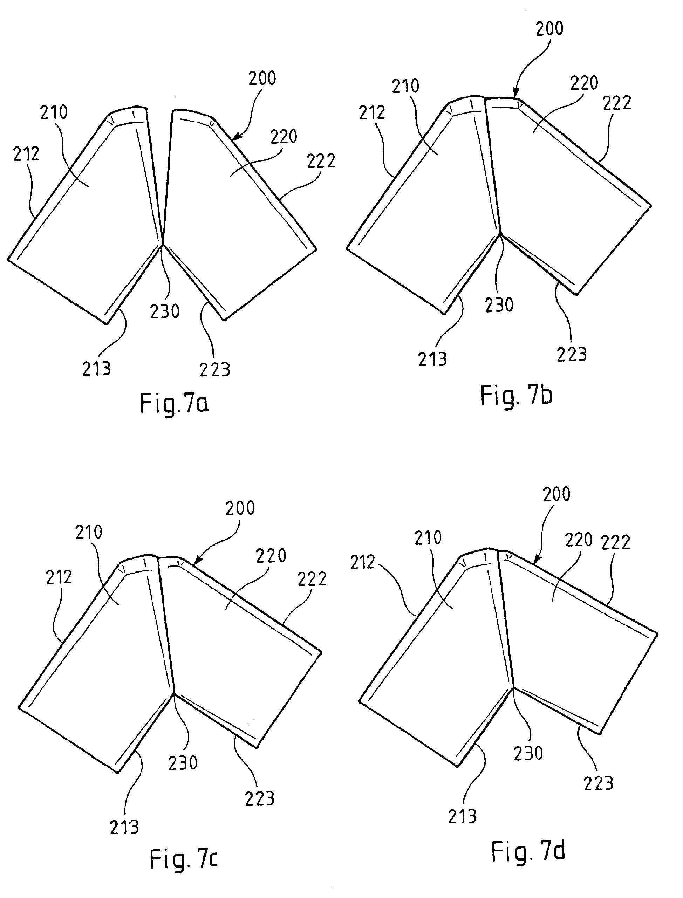

En effet, comme le montrent plus particulièrement les figures 7b, 7c et 7d, les deux parties 210, 220 du couvercle de fermeture 200 peuvent prendre trois positions angulaires relatives différentes pour des angulations de goulottes sensiblement égales à 85, 90 et 95 degrés, l'une des parties 220 rentrant sous l'autre partie 210 du couvercle de fermeture 200.

Comme le montre plus particulièrement la figure 7a, le couvercle de fermeture 200 est réalisé d'une seule pièce par moulage d'une matière plastique et sort du moule avec ses deux parties 210, 220 formant entre elles un angle de 72 degrés environ.

Les différentes positions angulaires des tronçons de goulottes 10, 20 sont obtenues en décalant légèrement un bord coupé 11 d'un des tronçons de goulottes 10, par rapport au bord transversal 112 correspondant de la platine 110, comme cela est représenté plus particulièrement sur la figure 1, la variation d'angle étant de 5 degrés.

Comme le montrent les figures 5 et 6, chacune des parties 210, 220 du couvercle de fermeture 200 comporte des bords longitudinaux tombants 212, 213, 222, 223 venant recouvrir les parois 113, 113' situées sur les bords longitudinaux de la platine 110 du dispositif de raccordement 100.

Ce couvercle de fermeture 200 s'accroche plus particulièrement à des rebords et dents d'encliquetage 113a, 113b, 114 prévus le long du bord inférieur de la paroi longitudinale 113 portée par la platine 110.

Les rebords 113a, 113b positionnent la platine lorsque celle-ci est placée le long d'une ou plusieurs parois, de telle sorte que la mise en place du couvercle de fermeture n'est pas gênée par ces parois.

En outre, sur sa face inférieure, chaque partie 210, 220 du couvercle de fermeture 200 comporte des moyens d'accrochage 214, 224 aux tronçons de goulottes 10, 20.

Ces moyens d'accrochage 214, 224 comprennent ici des nervures longitudinales 214b, 214a, 224b, 224a venant s'accrocher à l'intérieur et à l'extérieur des retours 12a, 13a, 22a, 23a des ailes latérales 12, 13, 22, 23 des tronçons de goulottes 10, 20, de la même manière que les couvercles de fermeture non représentés desdits tronçons de goulottes.

Bien entendu, selon une variante non représentée du dispositif de raccordement représenté plus particulièrement sur les figures 1 à 4, on pourrait prévoir que la platine 110 présente des bords transversaux d'extrémité, aptes à être positionnés de manière adjacente à des bords coupés de tronçons de goulottes, positionnés de manière parallèle, de façon à constituer un dispositif de jonction de tronçons de goulottes s'étendant dans un même plan selon une direction unique.

Un tel dispositif de raccordement 100 est formé par moulage d'une matière plastique en une seule pièce.

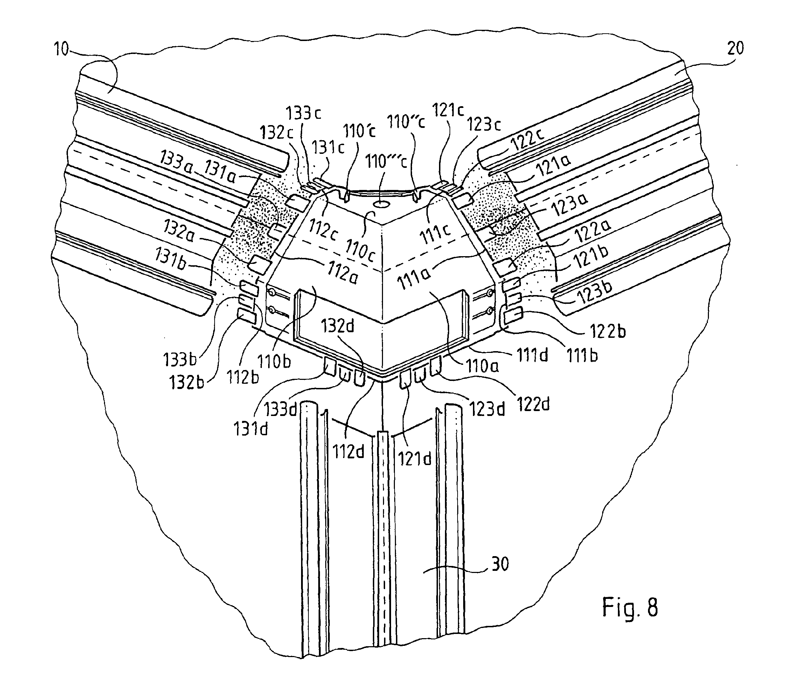

Sur la figure 8, on a représenté une variante de réalisation du dispositif de raccordement 100 selon l'invention.

Selon cette variante, la platine 110 du dispositif comprend deux parties 110a, 110b formant entre elles un angle rentrant. En variante non représentée, on pourrait envisager que ces deux parties forment un angle sortant.

Ici, les deux parties 110a, 110b de la platine 110 sont fixes l'une par rapport à l'autre mais, selon une variante non représentée, on peut envisager que ces parties soient articulées l'une par rapport à l'autre par l'intermédiaire d'une partie de jonction formant charnière.

Ici, ce dispositif d'angle permet la jonction de trois tronçons de goulottes 10, 20, 30 s'étendant dans trois directions différentes, deux tronçons de goulottes 10, 20 étant positionnés à la jonction entre un mur et un plafond et présentant une forme spécialement adaptée à cette jonction, et le troisième tronçon de goulotte 30 présentant un socle en forme de V, descendant dans l'angle de deux parois du plafond vers le sol.

Chaque bord 111a, 111b, 111c, 111d, 112a, 112b, 112c, 112d de chaque partie 110a, 110b, apte à être positionné de manière adjacente à un bord coupé d'un socle d'une goulotte ou d'un tronçon de goulotte 10, 20, 30, est muni de languettes longitudinales disposées en podium de la même manière que les languettes longitudinales décrites en référence aux figures 1 à 4.

Plus particulièrement, chaque bord 111a, 111b, 111c, 111d, 112a, 112b, 112c, 112d de chaque partie 110a, 110b de la platine 110 comporte deux languettes longitudinales d'extrémité 121a, 122a, 121b, 122b, 121c, 122c, 121d, 122d, 131a, 132a, 131b, 132b, 131c, 132c, 131d, 132d portées par la face supérieure de chaque partie 110a, 110b de la platine 110 et destinées à s'appliquer élastiquement contre la face supérieure d'un fond d'un socle de goulotte ou contre la face intérieure d'une aile latérale d'un socle de goulotte.

Il est prévu, également, entre ces deux languettes d'extrémité, une languette centrale 123a, 123b, 123c, 123d, 133a, 133b, 133c, 133d située sur la face inférieure de chaque partie 110a, 110b de la platine 110 et destinée à s'appliquer contre la face inférieure d'un fond ou d'une aile latérale d'un socle de goulotte.

Les languettes longitudinales des parties 110a, 110b de la platine 110 du dispositif de raccordement représenté sur la figure 8 présentent des formes et des épaisseurs identiques à celles des platines des dispositifs de raccordement représentés sur les figures 1 à 4 et ne seront pas décrites dans le détail.

En outre, ce dispositif de raccordement comporte une partie supérieure en forme de console 110c venant s'appliquer sur le plafond et percée d'un orifice 110"'c permettant le passage d'un moyen de fixation pour la fixation du dispositif de raccordement au plafond.

Il est prévu, sur le bord supérieur de cette console, des crochets 110'c, 110"c pour l'accrochage d'un couvercle de fermeture non représenté.

Bien entendu, un tel dispositif de raccordement peut être aménagé pour former le raccordement de trois tronçons de goulottes, non pas positionnés à la jonction entre un mur et un plafond, mais positionnés en plinthe.

La présente invention n'est nullement limitée au mode de réalisation décrit et représenté, mais l'homme du métier saura y apporter toute variante conforme à son esprit.

## Revendications

1. Dispositif de raccordement (100) d'au moins deux goulottes(10, 20), comprenant une platine (110) pour joindre les fonds des socles des goulottes (10, 20), ladite platine (110) étant munie, sur chacun de ses bords adjacents (111, 112) aux bords coupés (11, 21) des socles des goulottes (10, 20), de languettes longitudinales (121, 122, 123 ; 131, 132, 133) aptes à prendre appui sur les deux faces opposées (10a, 10b ; 20a, 20b) de chaque fond, **caractérisé en ce que** lesdites languettes (121, 122, 123 ; 131, 132, 133) sensiblement planes présentent une faible épaisseur comprise entre environ 0,2 et 1 mm, et sont aptes à prendre appui élastiquement sur lesdites faces opposées (10a, 10b ; 20a, 20b) dudit fond.

2. Dispositif selon la revendication 1, **caractérisé en ce que**, sur chaque bord (111, 112) de la platine (110) adjacent à un bord coupé (11, 21) d'un socle d'une goulotte (10), trois languettes longitudinales (121, 122, 123; 131, 132, 133) sont disposées en podium, deux languettes d'extrémité (121, 122 ; 131, 132) étant positionnées sur la face supérieure de la platine (110) de manière à se placer contre la face supérieure (10a, 20a) du fond du socle de la goulotte (10, 20), et une languette centrale (123 ; 133) étant positionnée sur la face inférieure de la platine (110) de manière à se placer contre la face inférieure (10b, 20b) du fond du socle de la goulotte (10, 20).

3. Dispositif selon l'une des revendications 1 ou 2, **caractérisé en ce que** les languettes longitudinales (121, 122, 123 ; 131, 132, 133) présentent une épaisseur identique.

4. Dispositif selon l'une des revendications 1 à 3, **caractérisé en ce que** l'épaisseur de chaque languette longitudinale (121, 122, 123 ; 131, 132, 133) est égale à 0,5 mm environ.

5. Dispositif selon l'une des revendications précédentes, **caractérisé en ce que** ladite platine (110) est plane, avec au moins deux bords d'extrémité transversaux (111, 112) aptes à être placés de manière adjacente à deux bords coupés (11, 21) de deux goulottes (10, 20).

6. Dispositif selon la revendication 5, **caractérisé en ce que** les deux bords d'extrémité transversaux (111, 112) de ladite platine (110) forment entre eux un angle de manière à permettre le raccordement de deux goulottes (10, 20) s'étendant dans un même plan selon deux directions différentes.

7. Dispositif selon l'une des revendications 5 ou 6, **caractérisé en ce que** ladite platine (110) comprend, sur ses bords longitudinaux, des parois (113, 113') aptes à se positionner dans le prolongement des ailes latérales (12, 13 ; 22, 23) des socles des goulottes (10, 20) de manière à assurer une continuité de parois.

8. Dispositif selon l'une des revendications 5 à 7, **caractérisé en ce que** ladite platine (110) porte, sur sa face supérieure, une cheminée (115) percée d'un orifice traversant (116) qui débouche sur la face inférieure de la platine, cet orifice formant un conduit de passage pour un élément de fixation de ladite platine sur une paroi support de celle-ci.

9. Dispositif selon l'une des revendications 1 à 4, **caractérisé en ce que** ladite platine (110) comprend deux parties (110a, 110b) formant entre elles un angle rentrant ou sortant, chaque bord (111 a, 111 b, 111 c, 111 d ; 112a, 112b, 112c, 112d) de chaque partie (110a, 110b) de la platine (110), apte à être positionné de manière adjacente à un bord coupé d'un socle d'une goulotte, étant muni de languettes longitudinales (121a, 122a, 123a, 121b, 122b, 123b, 121c, 122c, 123c, 121d, 122d, 123d ; 131a, 132a, 133a, 131b, 132b, 133b, 131c, 132c, 133c, 131d, 132d, 133d).

10. Dispositif selon la revendication 9, **caractérisé en ce que** lesdites languettes (121a, 122a, 123a, 121b, 122b, 123b, 121c, 122c, 123c, 121d, 122d, 123d ; 131a, 132a, 133a, 131b, 132b, 133b, 131c, 132c, 133c, 131d, 132d, 133d) sont aptes à prendre appui élastiquement sur les faces opposées des fonds et des ailes latérales des socles des goulottes.

11. Dispositif selon l'une des revendications 10 ou 9, **caractérisé en ce que** les deux parties (110a, 110b) de la platine (110) sont fixes l'une par rapport à l'autre.

12. Dispositif selon l'une des revendications 10 ou 9, **caractérisé en ce que** lesdites parties (110a, 110b) de ladite platine (110) sont articulées l'une par rapport à l'autre par l'intermédiaire d'une partie de jonction formant charnière.

13. Dispositif selon l'une des revendications précédentes, **caractérisé en ce que** ladite platine est formée en une seule pièce par moulage d'une matière plastique.

## Claims

1. Device (100) for connecting at least two lengths of trunking (10, 20), including a plate (110) for joining backs of base sections of the trunking (10, 20), said plate (110) having on each of its edges (111, 112) adjacent to cut edges (11, 21) of the trunking (10, 20) base sections longitudinal tongues (121, 122, 123; 131, 132, 133) adapted to bear on two opposite faces (10a, 10b; 20a, 20b) of each back, **characterised in that** said tongues (121, 122, 123; 131, 132, 133) are substantially plane, have a small thickness from about 0.2 mm to about 1 mm, and are adapted to bear elastically against said opposite faces (10a, 10b; 20a, 20b) of said back.

2. Device according to claim 1, **characterised in that** three longitudinal tongues (121, 122, 123; 131, 132, 133) on each edge (111, 112) of the plate (110) adjacent to a cut edge (11, 21) of a trunking (10) base section are disposed in an arrangement resembling the shape of a winners' podium, two end tongues (121 ,122; 131,132) being positioned on the top face of the plate (110) so as to be placed against the top face (10a, 20a) of the back of the trunking (10, 20) base section, and a central tongue (123; 133) being positioned on the bottom face of the plate (110) so as to be placed against the bottom face (10b, 20b) of the back of the trunking (10, 20) base section.

3. Device according to claim 1 or 2, **characterised in that** the longitudinal tongues (121, 122, 123; 131, 132, 133) have the same thickness.

4. Device according to any of claims 1 to 3, **characterised in that** the thickness of each longitudinal tongue (121, 122, 123; 131, 132, 133) is approximately 0.5 mm.

5. Device according to any preceeding claim, **characterised in that** said plate (110) is plane and has at least two transverse ends (111, 112) adapted to be placed adjacent to two cut edges (11, 21) of two lengths of trunking (10,20).

6. Device according to claim 5, **characterised in that** the two transverse ends of said plate (111, 112) are at an angle to each other enabling connection of two lengths of trunking (110) extending in two different directions in the same plane.

7. Device according to claim 5 or 6, **characterised in that** said plate (110) has walls (113, 113') on its longitudinal edges adapted to be aligned with lateral flanges (12, 13; 22, 23) of said trunking (10, 20) base sections to provide continuous walls.

8. Device according to any of claims 5 to 7, **characterised in that** said plate (110) carries on its top face a pillar (115) with an orifice (116) through it that opens onto the bottom face of the plate, said orifice forming a passage for a fixing member for fixing said plate to a wall supporting it.

9. Device according to any of claims 1 to 4, **characterised in that** said plate (110) has two parts (110a, 110b) with an inside or outside corner between them and each edge (111a, 111b, 111c, 111d; 112a, 112b, 112c, 112d) of each part (110a, 110b) of the plate (110) adapted to be placed adjacent to a cut edge of a trunking base section is provided with longitudinal tongues (121a, 122a, 123a, 121b, 122b, 123b, 121c, 122c, 123c, 121d, 122d, 123d; 131a, 132a, 133a, 131b, 132b, 133b, 131c, 132c, 133c, 131d, 132d, 133d).

10. Device according to claim 9, **characterised in that** said tongues (121a, 122a, 123a, 121b, 122b, 123b, 121c, 122c, 123c, 121d, 122d, 123d; 131a, 132a, 133a, 131b, 132b, 133b, 131c, 132c, 133c, 131d, 132d, 133d) are adapted to bear elastically on opposite faces of the backs and the lateral flanges of the trunking base sections.

11. Device according to claim 9 or 10, **characterised in that** the two parts (110a, 110b) of the plate (110) are fixed relative to each other.

12. Device according to claim 9 or 10, **characterised in that** said parts (110a, 110b) of said plate (110) are articulated together by a junction part forming a hinge.

13. Device according to any preceeding claim, **characterised in that** said plate is moulded in one piece from a plastics material.

## Patentansprüche

1. Vorrichtung (100) zum Verbinden von wenigstens zwei Kabelkanälen (10, 20) mit einer Platte (110) zum Aneinanderfügen der Böden der Sockel der Kabelkanäle (10, 20), wobei die Platte (110) an jedem ihrer an die Schnittkanten (11, 21) der Sockel der Kabelkanäle (10, 20) angrenzenden Ränder (111, 112) mit Längszungen (121, 122, 123; 131, 132, 133) versehen ist, die auf den beiden sich gegenüberliegenden Seiten (10a, 10b; 20a, 20b) eines jeden Bodens aufzuliegen vermögen,
**dadurch gekennzeichnet, dass** die im Wesentlichen ebenen Zungen (121, 122, 123; 131, 132, 133) eine geringe Dicke von etwa 0,2 bis 1 mm haben und auf den sich gegenüberliegenden Seiten (10a, 10b; 20a, 20b) des Bodens elastisch aufzuliegen vermögen.

2. Vorrichtung nach Anspruch 1,
**dadurch gekennzeichnet, dass** an jedem an eine Schnittkante (11, 21) eines Sockels eines Kabelkanals (10) angrenzenden Rand (111, 112) der Platte (110) drei Längszungen (121, 122, 123; 131, 132, 133) podestartig versetzt angeordnet sind, wobei zwei äußere Zungen (121, 122; 131, 132) auf der Oberseite der Platte (110) so angeordnet sind, dass sie an der Oberseite (10a, 20a) des Bodens des Sockels des Kabelkanals (10, 20) platziert werden, und eine mittlere Zunge (123; 133) auf der Unterseite der Platte (110) so angeordnet ist, dass sie an der Unterseite (10a, 20b) des Bodens des Sockels des Kabelkanals (10, 20) platziert wird.

3. Vorrichtung nach einem der Ansprüche 1 oder 2,
**dadurch gekennzeichnet, dass** die Längszungen (121, 122, 123; 131, 132, 133) die gleiche Dicke haben.

4. Vorrichtung nach einem der Ansprüche 1 bis 3,
**dadurch gekennzeichnet, dass** die Dicke einer jeden Längszunge (121, 122, 123; 131, 132, 133) etwa 0,55 mm beträgt.

5. Vorrichtung nach einem der vorhergehenden Ansprüche,
**dadurch gekennzeichnet, dass** die Platte (110) eben ist mit wenigstens zwei quer laufenden äußeren Rändern (111, 112), die an zwei Schnittkanten (11, 21) der beiden Kabelkanäle (10, 20) angrenzend platziert zu werden vermögen.

6. Vorrichtung nach Anspruch 5,
**dadurch gekennzeichnet, dass** die beiden quer laufenden äußeren Ränder (111, 112) der Platte (110) miteinander einen Winkel bilden, um die Verbindung von zwei Kabelkanälen (10, 20) zu ermöglichen, die sich in derselben Ebene in zwei verschiedenen Richtungen erstrecken.

7. Vorrichtung nach einem der Ansprüche 5 oder 6,
**dadurch gekennzeichnet, dass** die Platte (110) an ihren Längsrändern Wände (113, 113') aufweist, die in Verlängerung der Seitenschenkel (12, 13; 22, 23) der Sockel der Kabelkanäle (10, 20) angeordnet zu werden vermögen, um eine Kontinuität der Wände sicherzustellen.

8. Vorrichtung nach einem der Ansprüche 5 bis 7,
**dadurch gekennzeichnet, dass** die Platte (110) auf ihrer Oberseite einen kaminartigen Schacht (115) trägt, der mit einer durchgehenden Öffnung (116) durchbohrt ist, die in die Unterseite der Platte mündet, wobei die Öffnung einen Durchgangskanal für ein Element zum Befestigen der Platte an einer die Platte tragenden Wand bildet.

9. Vorrichtung nach einem der Ansprüche 1 bis 4,
**dadurch gekennzeichnet, dass** die Platte (110) zwei Teile (110a, 110b) umfasst, die miteinander eine einspringende oder vorspringende Ecke bilden, wobei jeder Rand (111a, 111b, 111c, 111d; 112a, 112b, 112c, 112d) eines jeden Teils (110a, 110b) der Platte (110), der an eine Schnittkante eines Sockels eines Kabelkanals angrenzend platziert zu werden vermag, mit Längszungen (121a, 122a, 123a, 121b, 122b, 123b, 121c, 122c, 123c, 121d, 122d, 123d; 131a, 132a, 133a, 131b, 132b, 133b, 131c, 132c, 133c, 131d, 132d, 133d) versehen ist.

10. Vorrichtung nach Anspruch 9,
**dadurch gekennzeichnet, dass** die Zungen (121a, 122a, 123a, 121b, 122b, 123b, 121c, 122c, 123c, 121d, 122d, 123d; 131a, 132a, 133a, 131b, 132b, 133b, 131c, 132c, 133c, 131d, 132d, 133d) auf den gegenüberliegenden Seiten der Böden und Seitenschenkel der Sockel der Kabelkanäle elastisch aufzuliegen vermögen.

11. Vorrichtung nach einem der Ansprüche 10 oder 9,
**dadurch gekennzeichnet, dass** die beiden Teile (110a, 110b) der Platte (110) bezüglich einander feststehend sind.

12. Vorrichtung nach einem der Ansprüche 10 oder 9,
**dadurch gekennzeichnet, dass** die Teile (110a, 110b) der Platte (110) in Bezug zueinander durch ein Verbindungsteil gelenkig verbunden sind, das ein Scharnier bildet.

13. Vorrichtung nach einem der vorhergehenden Ansprüche,
**dadurch gekennzeichnet, dass** die Platte aus einem Stück durch Formgießen eines Kunststoffs gebildet ist.
